(19) Europäisches Patentamt
European Patent Office
Office européen des brevets

(11) **EP 4 650 149 A2**

(12) **EUROPÄISCHE PATENTANMELDUNG**

(43) Veröffentlichungstag:
**19.11.2025  Patentblatt 2025/47**

(21) Anmeldenummer: **25174321.7**

(22) Anmeldetag: **05.05.2025**

(51) Internationale Patentklassifikation (IPC):
**B29C 55/20** (2006.01)       **B29C 55/08** (2006.01)
**B29C 55/12** (2006.01)

(52) Gemeinsame Patentklassifikation (CPC):
**B29C 55/20;** B29C 55/08; B29C 55/12

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **16.05.2024  DE 102024113826**

(71) Anmelder: **Brückner Maschinenbau GmbH**
**83313 Siegsdorf (DE)**

(72) Erfinder:
  • **Lachner, Kilian**
    **83301 Traunreut (DE)**

  • **Swoboda, Martin**
    **83395 Freilassing (DE)**
  • **Rott, Thomas**
    **83313 Siegsdorf (DE)**
  • **Bösl, Marvin**
    **83236 Übersee (DE)**
  • **Mitterer, Matthias**
    **83236 Übersee (DE)**

(74) Vertreter: **Flach Bauer & Partner**
**Patentanwälte mbB**
**Adlzreiterstraße 11**
**83022 Rosenheim (DE)**

(54) **KLUPPENEINHEIT UND RECKANLAGE**

(57)    Die vorliegende Erfindung betrifft eine Kluppeneinheit (100) für eine Reckanlage (10) sowie eine Reckanlage. Die Kluppeneinheit (100) umfasst einen Grundkörper (110), eine Greifbacke (114) und zumindest eine Messerklappe (120). Die Messerklappe (120) ist um eine Drehachse (122) verschwenkbar am Grundkörper (110) angeordnet und weist an einem ersten Ende (121) eine komplementäre Greifbacke (124) auf, die in einer Greifstellung mit der Greifbacke (114) zusammenwirkt, um eine Materialbahn (50) zu greifen. Zudem umfasst die Messerklappe (120) einen Halsabschnitt (126) und einen Kopfabschnitt (128), wobei sich der Halsabschnitt (126) von der Drehachse (122) bis zum Kopfabschnitt (128) erstreckt, welcher Kopfabschnitt (128) ein zweites Ende (123) der Messerklappe (120) bildet. Der Kopfabschnitt (128) hat eine obere Länge ($L_K$), gemessen in einer Bewegungsrichtung (R) der Kluppeneinheit (100), welche zumindest 50% länger ist, als eine minimale Länge ($L_H$) des Halsabschnitts (122).

Fig. 7A

**Beschreibung**

**Gebiet der Erfindung**

Die vorliegende Erfindung betrifft eine magnetisch zu öffnende Kluppeneinheit für eine Reckanlage, und eine Reckanlage mit einer magnetischen Öffnereinrichtung und zumindest einer entsprechenden Kluppeneinheit.

**Hintergrund**

Reckanlagen finden insbesondere bei der Herstellung von Kunststofffolien Anwendung. Üblicherweise wird in solchen Anlagen die zu reckende Materialbahn, in der Regel eine Kunststofffolie, mittels Kluppeneinheiten erfasst und durch die Reckanlage bewegt. Die Kluppeneinheiten sind typischerweise auf umlaufenden Führungsschienen geführt und verfahrbar angeordnet.

Ein weiterer Bestandteil einer Reckanlage ist das sogenannte Transportsystem, das u.a. die Führungsschienen und ein Antriebssystem umfasst. Jedenfalls die Führungsschienen befinden sich ganz oder teilweise in einem Ofen. Dies ermöglicht es, die Materialbahn (insbesondere Kunststofffolie) vor und/oder während des Verstreckens zu temperieren (insbesondere aufzuheizen, oder auf einer gewünschten Temperatur zu halten).

Die umlaufenden Führungsschienen führen die Kluppeneinheiten auf einer Bewegungsbahn. Der Antrieb der Kluppeneinheiten kann zentral erfolgen, oder die Kluppeneinheiten können einzeln angetrieben sein.

Für einen zentralen Antrieb können die Kluppeneinheiten Kettenglieder umfassen und/oder über Kettenglieder miteinander zu einem Kettenstrang verbunden sein. Das Antriebssystem kann dann den jeweiligen Kettenstrang zentral antreiben.

Um die Materialbahn zu greifen bzw. zu erfassen, müssen die Kluppeneinheiten von einer geöffneten Stellung in eine geschlossene Stellung (Greifstellung) überführt werden. Dies erfolgt in einer sogenannten Einlaufzone der Reckanlage.

Typischerweise umfasst eine Kluppeneinheit zumindest eine Klemmflächen, die sich im Wesentlichen gegenüberliegen und dem Greifen der Materialbahn dienen. Durch die Betätigung eines Hebels (auch als Messerklappe bezeichnet) können die Klemmflächen bis in die Greifstellung aufeinander zu bewegt werden.

Zudem dient die Messerklappe dem Öffnen der Kluppeneinheit, um die Materialbahn nach dem Recken wieder freizugeben. Insbesondere müssen die Kluppeneinheiten nach dem Recken wieder geöffnet werden. Das Öffnen erfolgt typischerweise nach dem Durchlaufen einer Weiterheiz- oder Kühlzone der Reckanlage, durch welche die gereckte Folie mittels der Kluppeneinheiten geführt wird.

Nachdem die Kluppeneinheiten auf der umlaufenden Führungsschiene rückgeführt wurden, können sie die Materialbahn erneut greifen und durchlaufen anschließend wieder den Reckbereich der Reckanlage. Es versteht sich, dass die Kluppeneinheiten vor dem erneuten Greifen wieder geöffnet werden müssen.

Um Verschleiß an den Kluppeneinheiten zu vermeiden erfolgt das Öffnen bzw. Schließen der Kluppeneinheiten typischerweise berührungslos. Beispielsweise sind sogenannte magnetische Öffner- bzw. Schließeinrichtungen bekannt. Zusätzlich können - um ein Öffnen/Schließen sicherzustellen - sogenannte mechanische Zwangsöffner-/Zwangsschließeinrichtungen vorgesehen sein. Diese stellen einen Anschlag bereit, der an nicht geöffnete Kluppeneinheiten bzw. nicht geschlossene Kluppeneinheiten anschlägt, wenn diese Kluppeneinheiten an der Zwangsöffner-/Zwangsschließeinrichtungen vorbeigeführt werden.

Dieses Anschlagen und schnelle Öffnen bzw. Schließen führt zu einer sehr hohen mechanischen Belastung, sodass die Standzeit der Kluppeneinheiten deutlich reduziert wird. Bricht ein Teil der Kluppeneinheit, wie die Messerklappe oder ein anderer Teil des Greifmechanismus, aufgrund der Schlagbelastung, kann es auch dazu kommen, dass andere Teile der Reckanlage beschädigt werden, und/oder dass es zu Stillstandzeiten und somit zu Produktionsausfällen kommt.

Ein aktueller Trend in Reckanlagen ist es, die Produktionsgeschwindigkeit zu erhöhen. Jedoch sinkt die Öffnungsrate bekannter magnetischer - und somit anschlagfreier - Öffnereinrichtungen mit zunehmender Produktionsgeschwindigkeit und der damit einhergehenden höheren Fahrgeschwindigkeit der Kluppeneinheiten (entsprechend gilt dies für Schließeinrichtungen).

Insbesondere bei sehr schnell laufenden Reckanlagen mit Produktionsgeschwindigkeit beispielsweise >500m/min (mit einer entsprechenden hohen Fahrgeschwindigkeit der Kluppeneinheiten), wie sie beispielsweise zur Herstellung von PET, PE, PP, PA Folien und dergleichen zum Einsatz kommen, werden bekannte Kluppeneinheiten nicht mit ausreichend hoher Zuverlässigkeit berührungslos geöffnet/geschlossen, sodass es zu ungewünschten Zwangsöffnungen (entsprechend Zwangsschließungen) kommt.

**Beschreibung der Erfindung**

Es ist daher die Aufgabe der vorliegenden Erfindung ein zuverlässiges berührungsloses Öffnen (und Schließen) der Kluppeneinheiten - auch bei hohen Fahrgeschwindigkeiten - sicherzustellen.

Diese Aufgabe wird erfindungsgemäß durch eine Kluppeneinheit und eine Reckanlage gemäß den unabhängigen Ansprüchen gelöst. Weitere Aspekte der Erfindung sind in den abhängigen Ansprüchen, sowie in der nachfolgenden Beschreibung genannt.

Insbesondere wird die Aufgabe durch eine Kluppeneinheit für eine Reckanlage gelöst. Die Kluppeneinheit kann für eine Querreckanlage oder eine Simultanreckanlage ausgebildet sein.

Eine Querreckanlage ist eine Reckanlage, in der eine geförderte Materialbahn insbesondere in Breitenrichtung, d.h. in einer Richtung die im Wesentlichen orthogonal zu einer Förderrichtung der Materialbahn ist, gereckt wird. Bei Querreckanlagen sind die Führungsschienen in einem Querreckbereich beispielsweise so angeordnet sind, dass sich deren Abstand in Förderrichtung vergrößert. Ist zusätzlich eine Reckung in Längsrichtung gewünscht, kann der Querreckanlage eine Längsreckanlage vor- oder nachgeschalten sein.

Eine Simultanreckanlage ist eine Reckanlage bei der die Quer- und Längsreckung gleichzeitig erfolgt. Dies kann beispielsweise dadurch erreicht werden, dass die einzelnen Kluppeneinheiten auf den Führungsschienen unterschiedlich schnell beschleunigt werden. Hierdurch kommt es zu einer Längsreckung der Materialbahn. Durch die Anordnung der Führungsschienen, sodass sich deren Abstand in Förderrichtung vergrößert, kann zeitgleich eine Querreckung erreicht werden.

Die Kluppeneinheit ist dazu eingerichtet auf einer Führungsschiene der Reckanlage geführt zu werden. Hierzu kann die Kluppeneinheit zumindest ein Führungselement umfassen. Das zumindest eine Führungselement kann an einem Grundkörper der Kluppeneinheit angeordnet sein, und dazu eingerichtet sein die Kluppeneinheit auf der Führungsschiene zu führen. Insbesondere kann das zumindest eine Führungselement ein Gleitelement, oder eine Führungsrolle umfassen.

Weiterhin kann der Grundkörper der Kluppeneinheit dazu eingerichtet sein mit einem Kettenglied verbunden zu werden. Das Kettenglied kann Teil einer angetriebenen Kette sein. Ebenso kann die Kluppeneinheit zumindest ein Kettenglied umfassen, wobei der Grundkörper mit dem zumindest einem Kettenglied fest verbunden sein kann. So können mehrere Kluppeneinheiten zu einem Kettenstrang verbunden werden und von einem zentralen Antrieb angetrieben werden.

Alternativ kann jede Kluppeneinheit einzeln angetrieben sein. Hierzu kann die Führungsschiene - zumindest Bereichsweise - als Linearmotor ausgeführt sein, oder der Führungsschiene ist zumindest ein Linearmotor zugeordnet.

Die erfindungsgemäße Kluppeneinheit umfasst neben dem Grundkörper eine Greifbacke und zumindest eine Messerklappe. Die Greifbacke kann integral mit dem Grundkörper ausgebildet sein, oder mit dem Grundkörper (mittelbar oder unmittelbar) verbunden sein. Die Greifbacke kann eine feststehende oder eine bewegliche Greifbacke sein.

Die Messerklappe (auch als Klemmhebel bezeichnet) ist um eine Drehachse verschwenkbar am Grundkörper angeordnet. Beispielsweise kann die Messerklappe eine Durchgangsöffnung zur Aufnahme einer Drehachse aufweisen. Alternativ kann eine Drehachse (oder Drehachsenabschnitte) an der Messerklappe angeformt, oder angebracht sein.

Die Messerklappe ist so am Grundkörper angeordnet, dass sie von einer Greifstellung in eine Offenstellung verschwenkt werden kann. Entsprechend kann sie - in entgegengesetzter Schwenkrichtung - von der Offenstellung in die Greifstellung verschwenkt werden.

Die Messerklappe weist an einem ersten Ende eine komplementäre Greifbacke auf. Die komplementäre Greifbacke wirkt in der Greifstellung mit der Greifbacke zusammen um eine Materialbahn zu greifen. Insbesondere kann die Materialbahn, beispielweise eine Kunststofffolie, zwischen der Greifbacke und der komplementären Greifbacke eingeklemmt werden und so gegriffen werden.

Um die Greifkraft zu erhöhen, kann die Greifbacke und/oder die komplementäre Greifbacke profiliert sein. Beispielsweise können die Greifbacken Rippen und/oder Zähne aufweisen. Ebenso können die Greifbacken im Wesentlichen glatt gestaltet sein.

Die Messerklappe weist zudem einen Halsabschnitt und einen Kopfabschnitt auf. Der Halsabschnitt erstreckt sich von der Drehachse bis zum Kopfabschnitt, wobei der Kopfabschnitt ein zweites Ende der Messerklappe bildet. Insbesondere kann die Drehachse zwischen der komplementären Greifbacke und dem Kopfabschnitt angeordnet sein. Weiterhin kann sich ein Schenkel von der Drehachse bis zur komplementären Greifbacke erstrecken. Der Schenkel und der Halsabschnitt können sich an der Drehachse treffen und einen Winkel einschließen, der im Bereich von 100° bis 170°, oder in einem Bereich von 120° bis 150° liegt.

Der Kopfabschnitt weist zudem eine obere Länge $L_K$ auf, welche zumindest 50% länger ist, als eine minimale Länge $L_H$ des Halsabschnitts. Die obere Länge $L_K$ und die minimale Länge $L_H$ werden in einer Bewegungsrichtung R der Kluppeneinheit (auf der Führungsschiene) gemessen. Die obere Länge $L_K$ ist dabei eine Länge des Kopfabschnitts an dessen Endkante, welche im Wesentlichen parallel zu der Drehachse angeordnet sein kann. Die minimale Länge $L_H$ wird in dem Bereich gemessen, in welchem der Halsabschnitt seine geringste Längenausdehnung aufweist. In einem Aspekt ist dies in einem Bereich, in dem der Halsabschnitt an den Kopfabschnitt anschließt.

In einem weiteren Aspekt ist die obere Länge $L_K$ zumindest 60% länger als eine minimale Länge $L_H$ des Halsabschnitts, oder zumindest 70% länger als eine minimale Länge $L_H$ des Halsabschnitts, oder zumindest 80% länger als eine minimale Länge $L_H$ des Halsabschnitts. Optional kann die obere Länge $L_K$ höchstens 120% länger sein als eine minimale Länge $L_H$ des Halsabschnitts, oder höchstens 110% länger als eine minimale Länge $L_H$ des Halsabschnitts, oder höchstens 100 % länger als eine minimale Länge $L_H$ des Halsabschnitts.

Durch die längere Gestaltung des Kopfabschnitts, kann die Magnetkraft, die zum Öffnen/Schließen der Kluppeneinheit zur Verfügung steht, deutlich erhöht werden. Es zeigt sich, dass die Magnetkraft durch diese Gestaltung um bis zu 25% oder sogar um bis zu 35% gesteigert werden kann. Dies führt zu einer zuverlässigen Öffnung der Messerklappen selbst bei hohen Fahrgeschwindigkeiten von > 500 m/min, oder > 600 m/min oder > 700 m/min. Zudem wird die Zeitspanne vergrößert, in der ein Magnet einer Öffnereinrichtung auf die Messerkluppe wirkt, wenn die Messerkluppe an dem Magneten vorbeigeführt wird. Auch dies führt zu einer höheren Zuverlässigkeit beim Öffnen. Entsprechend gilt dies für Schließeinrichtungen, d.h. für das Verschwenken der Messerklappe aus der Offenstellung in die Greifstellung.

Weiterhin kann die Magnetkraft durch die Gestaltung des sogenannten Flügelwinkels φ erhöht werden. Der Flügelwinkel φ ist der Winkel, den eine Seitenkante des Kopfabschnitts mit einer Linie einschließt, die parallel zur Drehachse ist. Beispielsweise liegt der Flügelwinkel φ in einem Bereich von 0° bis 80°, oder in einem Bereich von 30° bis 75°, oder in einem Bereich von 45° bis 65°. Es zeigt sich, dass die erzielbare Steigerung der Magnetkraft in einem Bereich von 45° bis 65° am größten ist. Ab 65° ist die Steigerung nur noch gering. Durch die Steigerung der Magnetkraft kann können hohe Fahrgeschwindigkeiten realisiert werden.

In einem Aspekt kann die Kluppeneinheit mehrere Messerklappen (beispielsweise zwei, oder drei) umfassen. In diesem Aspekt sind die Messerklappen vorzugsweise in der Bewegungsrichtung R der Kluppeneinheit nebeneinander angeordnet. Somit kann eine Materialbahn mit einer Kluppeneinheit an mehreren Stellen gegriffen werden. Somit wird eine in Querrichtung der Materialbahn wirkende Haltekraft erhöht.

Weiterhin kann sich die Länge $L_H$ des Halsabschnitts der Messerklappe in Richtung des Kopfabschnitts zumindest bereichsweise verjüngen. Dies erlaubt es das Gewicht der Messerklappe zu reduzieren und die Lage des Schwerpunkts zu bestimmen. Grundsätzlich ist es gewünscht die bewegliche Messerklappe so leicht wie möglich zu gestalten, um eine möglichst geringen Massenträgheit zu erreichen. Dies vereinfacht das Öffnen bzw. Schließen. Weiterhin kann so der Schwerpunkt der Messerklappe in der Drehachse liegen oder zumindest möglichst nahe der Drehachse angeordnet sein. Auch hierdurch wird das Öffnen bzw. Schließen vereinfacht, da weniger Kraft zum Öffnen bzw. Schließen aufgebracht werden muss.

In einem weiteren Aspekt kann der Kopfabschnitt einen Rücksprung oder einen Durchbruch aufweisen. Auch hierdurch kann Gewicht eingespart werden und/oder die Lage des Schwerpunkts beeinflusst werden. Weist der Kopfabschnitt einen Rücksprung auf, kann dieser beispielsweise eine Tiefe aufweisen, die zumindest 30 %, oder zumindest 50%, oder zumindest 70% der Breite des Kopfabschnitts beträgt. Die Breite des Kopfabschnitts wird in einer Richtung gemessen, die orthogonal zur Längsausdehnung des Kopfabschnitts (Länge $L_K$) und orthogonal zur Haupterstreckungsrichtung des Halsabschnitts liegt.

Dieser Durchbruch oder Rücksprung des Kopfabschnitts kann weiterhin eine obere Kante aufweisen, die im Wesentlichen parallel zu einer oberen Kante des Kopfabschnitts verläuft. Der Abstand zwischen der oberen Kante des Rücksprungs oder des Durchbruchs und der oberen Kante des Kopfabschnitts kann beispielsweise im Bereich von 2 mm bis 6 mm, oder im Bereich von 2.5 mm bis 5 mm, oder im Bereich von 3 mm bis 4 mm liegen. Es hat sich gezeigt, dass für diese Bereiche das Verhältnis von Massenträgheitszunahme und Magnetkraftsteigerung ideal ist.

In einem Aspekt kann die obere Länge $L_K$ des Kopfabschnitts im Bereich von 20 mm bis 60 mm, oder im Bereich von 35 mm bis 55 mm, oder im Bereich von 45 mm bis 50 mm liegen.

In einem weiteren Aspekt weist der Kopfabschnitt eine größere Breite $B_K$ auf als der Halsabschnitt. Dies erlaubt eine weitere Steigerung der Magnetkraft. Insbesondere kann die Breite $B_K$ in einem Bereich von 2 mm bis 6 mm, oder in einem Bereich von 3 mm bis 5.5 mm, oder in einem Bereich von 4 mm bis 5 mm liegen. Es hat sich gezeigt, dass höhere Breiten zu keinem signifikanten Anstieg der Magnetkraft führen.

In einem weiteren Aspekt weist der Kopfabschnitt der Messerklappe eine Höhe $H_K$ auf, die in einem Bereich von 10 mm bis 30 mm, oder in einem Bereich von 15 mm bis 25 mm, oder in einem Bereich von 17 mm bis 21 mm liegt. Die Höhe $H_K$ wird in einer Richtung gemessen, die in der Haupterstreckungsrichtung des Halsabschnitts liegt (von der Drehachse zum Kopfabschnitt weisend).

In einem weiteren Aspekt weist die Messerklappe einen Anschlagpunkt für ein Vorspannelement auf. Das Vorspannelement kann beispielweise eine Druckfeder sein. Das Vorspannelement, welches gemäß diesem Aspekt Teil der Kluppeneinheit sein kann, ist zwischen dem Anschlagpunkt und dem Grundkörper angeordnet. Dies ermöglicht es die Messerklappe in der Greifstellung vorzuspannen und so die Greifkraft weiter zu erhöhen und ein ungewolltes Öffnen der Messerklappe zu verhindern.

Insbesondere kann der Anschlagpunkt in einem Bereich zwischen der komplementären Greifbacke und der Drehachse angeordnet sein, oder die Drehachse kann in einem Bereich zwischen der komplementären Greifbacke und dem Anschlagpunkt angeordnet sein. Es hat sich gezeigt, dass diese Anordnung zu einer hohen Greifkraft und einer guten Zuverlässigkeit beim Öffnen der Messerklappe führt.

In einem weiteren Aspekt kann der Kopfabschnitt stärker magnetisiert sein, als der Halsabschnitt. Dies kann durch eine entsprechende Wärmebehandlung, insbesondere Härtung, erreicht werden, sodass sich jedenfalls im Kopfabschnitt (bereichsweise) ein martensitisches Gefüge ergibt. Zusätzlich oder alternativ kann der Kopfabschnitt einen geringeren Kohlenstoffgehalt (C-Gehalt) aufweisen, sodass eine stärkere Magnetisierung möglich ist. Durch die Magnetisierung des Kopfabschnitts kann die Magnetkraft, die zum Öffnen/Schließen zur Verfügung steht weiter gesteigert werden. Somit können noch höhere Fahrgeschwindigkeiten realisiert werden, ohne dass Einbußen bei der Zuverlässigkeit des Öffnens/Schließens zu erwarten sind.

In einem weiteren Aspekt kann der Kopfabschnitt zumindest einen Magneten umfasst. Auch hierdurch kann die Magnetkraft, die zum Öffnen/Schließen zur Verfügung steht weiter gesteigert werden.

Die Aufgabe wird weiterhin durch eine Reckanlage, insbesondere eine Querreckanlage oder eine Simultanreckanlage, gelöst. Die Reckanlage umfasst zumindest eine Führungsschiene und zumindest eine der zuvor beschriebenen Kluppeneinheiten. Die Kluppeneinheit ist dabei auf der Führungsschiene geführt. Die Reckanlage kann dazu eingerichtet sein die Kluppeneinheiten mit einer bei Fahrgeschwindigkeit von zumindest 500 m/min, oder von zumindest 600 m/min oder von zumindest 700 m/min auf der Führungsschiene umlaufend anzutreiben.

Weiterhin kann die Reckanlage zumindest eine magnetische Öffnereinrichtung umfassen, welche die Kluppeneinheit (bzw. die Messerklappe) nach dem Durchlaufen einer Reckzone der Reckanlage berührungslos öffnet.

Weiterhin kann die Reckanlage zumindest eine magnetische Schließeinrichtung umfassen, welche die Kluppeneinheit (bzw. die Messerklappe) vor dem Durchlaufen einer Reckzone berührungslos schließt. Dies führt zum Greifen der Materialbahn.

Insbesondere kann die magnetische Öffnereinrichtung zumindest einen Magnet umfassen, welcher Magnet so im Bereich der zumindest einen Führungsschiene angeordnet ist, dass die Messerklappe einer Kluppeneinheit in die Offenstellung verschwenkt wird, wenn die Kluppeneinheit an der magnetischen Öffnereinrichtung vorbei geführt wird.

Auch die magnetische Schließeinrichtung kann zumindest einen Magnet umfassen, welcher Magnet so im Bereich der zumindest einen Führungsschiene angeordnet ist, dass die Messerklappe einer Kluppeneinheit in die Greifstellung verschwenkt wird, wenn die Kluppeneinheit an der magnetischen Schließeinrichtung vorbei geführt wird.

In einem weiteren Aspekt kann der zumindest eine Magnet eine Länge $L_M$ aufweisen, gemessen in einer Bewegungsrichtung der Kluppeneinheit, die die folgende Bedingung erfüllt:

$$0.8\ L_K \leq L_M \leq 1.2\ L_K.$$

Dies ermöglicht das Aufbringen einer hohen Magnetkraft und somit ein zuverlässiges Öffnen bzw. Schließen.

In einem weiteren Aspekt kann die obere Länge $L_K$ zumindest 30% länger sein als die Länge $L_M$ des Magneten, oder zumindest 40% länger sein als die Länge $L_M$ des Magneten, oder zumindest 50% länger sein als die Länge $L_M$ des Magneten.

Optional kann die obere Länge $L_K$ zumindest 50% kürzer sein als die Länge $L_M$ des Magneten, oder zumindest 40% kürzer sein als die Länge $L_M$ des Magneten, oder zumindest 30% kürzer sein als die Länge $L_M$ des Magneten.

Weiterhin kann der Abstand zwischen zwei benachbarten Magneten einer Öffnereinrichtung (entsprechend einer Schließeinrichtung) kleiner oder gleich $(L_M-L_K)/2$ sein. Beispielsweise kann der Abstand zwischen zwei benachbarten Magneten $\leq 4$ mm, oder $\leq 3$ mm, oder $\leq 2.5$ mm sein.

Dies ermöglicht es, eine nahezu konstante Magnetkraft über eine Länge der Öffnereinrichtung bzw. der Schließeinrichtung auf die Messerklappe aufzubringen, wodurch die Zuverlässigkeit des Öffnens/-Schließens weiter gesteigert werden kann. Insbesondere kann dadurch vermieden werden, dass eine bereits teilweise geöffnete Messerklappe (bzw. teilweise geschlossene Messerklappe) ungewollt in die Greifstellung (bzw. die Offenstellung) zurückgehrt.

In einem weiteren Aspekt kann ein Luftspalt zwischen dem zumindest einen Magnet und dem Kopfabschnitt einer Messerklappe im Bereich von 1.5 mm bis 5 mm, oder im Bereich von 2 mm bis 4 mm oder im Bereich von 2.5 mm bis 3.5 mm liegen. Hierdurch können hohe Magnetkräfte erzielt werden.

Zudem kann die Reckanlage zumindest einen Gegenhaltemagnet aufweisen, welcher so im Bereich der magnetischen Öffnereinrichtung (bzw. Schließeinrichtung) angeordnet ist, dass er die zumindest einen Kluppeneinheit in Richtung der Führungsschiene drängt. Somit kann vermieden werden, dass die durch die magnetischen Öffnereinrichtung (bzw. Schließeinrichtung) auf die Kluppeneinheit wirkende Magnetkraft die Kluppeneinheit von der Führungsschiene abhebt.

**Kurze Beschreibung der Figuren**

Die Erfindung wird nachfolgend anhand der beigefügten Figuren beispielhaft näher erläutert. Es zeigen:

Fig. 1      eine schematische Darstellung einer ersten Ausführungsform einer erfindungsgemäßen Reckanlage;

Fig. 2      eine schematische Darstellung einer zweiten Ausführungsform einer erfindungsgemäßen Reckanlage;

Fig. 3      eine schematische Darstellung einer erfindungsgemäßen Kluppeneinheit;

Fig. 4      eine schematische Darstellung einer Messerklappe nach dem Stand der Technik;

Fig. 5      eine schematische Darstellung einer erfindungsgemäßen Messerklappe;

Fig. 6      eine schematische Darstellung einer weiteren erfindungsgemäßen Messerklappe;

Fig. 7A    eine schematische Darstellung einer Messerklappe mit Magneten zum Öffnen/Schließen;

Fig. 7B    einen Graphen, der den Verlauf der Magnetkraft zeigt, und

Fig. 8     einen weiteren Graphen, der den Verlauf der Magnetkraft zeigt.

## Beschreibung der Figuren

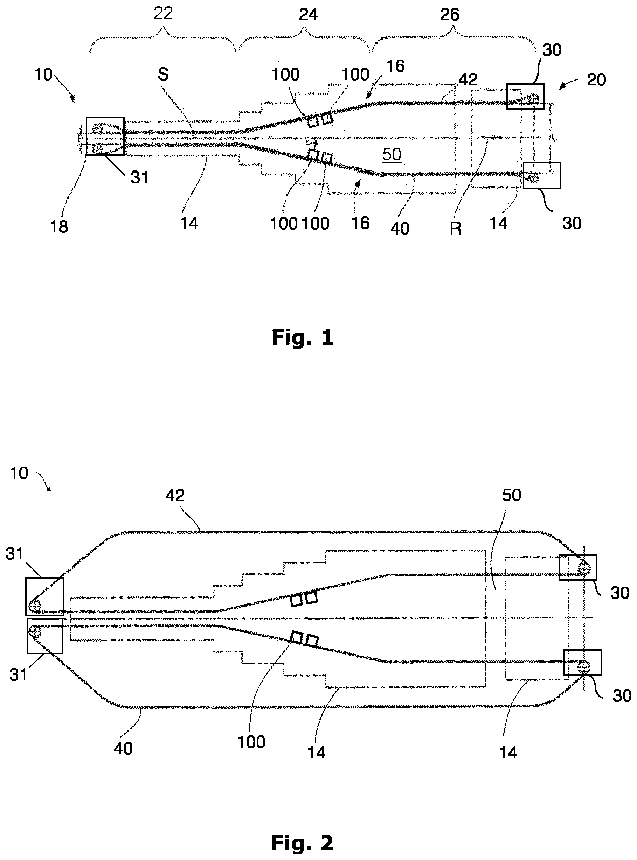

Insbesondere zeigt Fig. 1 eine Reckanlage 10. Diese weist einen Ofen 14 sowie zwei Antriebssysteme 16 auf.

Die Antriebssysteme 16 sind gegenüber einer Symmetrieebene S der Reckanlage 10 spiegelsymmetrisch angeordnet und erstrecken sich zumindest teilweise im Ofen 14. In einer Einlaufzone 18 sowie einer Auslaufzone 20, in denen eine Materialbahn 50 der Reckanlage 10 zu- bzw. abgeführt wird, verlaufen die Antriebssysteme 16 außerhalb des Ofens 14.

Neben der Einlaufzone 18 und der Auslaufzone 20 weist die hier gezeigte Reckanlage zumindest drei weitere Zonen 22, 24, 26 auf.

Die Zonen 22, 24, 26 grenzen aneinander an, sodass - entlang der üblicher Bewegungs- bzw. Abzugsrichtung R der Reckanlage 10 betrachtet - an die Einlaufzone 18 zunächst die erste Zone 22, dann die zweite Zone 24, dann die dritte Zone 26, und schließlich die Auslaufzone 20 anschließt.

In der an die Einlaufzone 18 angrenzenden ersten Zone 22 der Reckanlage 10, auch Vorheizzone genannt, haben die Antriebssysteme 16 einen ersten Abstand zueinander.

In der zweiten Zone 24, auch Reckzone genannt, vergrößert sich der Abstand der beiden Antriebssysteme 16 zueinander, bis schließlich zu Beginn der dritten Zone 26, auch Wärmebehandlungszone genannt, ein zweiter Abstand erreicht ist.

Jedes der Antriebssysteme 16 hat in an sich bekannter Weise eine Führungsschiene 40, 42, an der eine Vielzahl von Kluppeneinheiten 100 geführt sind. Die Kluppeneinheiten 100 können durch einen Antrieb des jeweiligen Antriebssystems 16 entlang der Führungsschiene 40, 42 bewegt werden.

In den Figuren 1 und 2 sind jeweils nur zwei Kluppeneinheiten 100 pro Antriebssystem 16 symbolisch dargestellt. Die Reckanlage 10 weist jedoch eine Vielzahl von Kluppeneinheiten 100 auf.

Die Führungsschiene 40, 42 der jeweiligen Antriebssysteme 16 beschreiben eine geschlossene Bahn von der Einlaufzone 18 zur Auslaufzone 20 und zurück. Der Führungsschienenabschnitt, der den Vorlauf bildet, erstreckt sich in vorgesehener Bewegungsrichtung der Kluppeneinheiten 100 zwischen der Einlaufzone 18 und der Auslaufzone 20 innerhalb des Ofens 14.

Der Führungsschienenabschnitt, der in üblicher Betriebsrichtung von der Auslaufzone 20 zur Einlaufzone 18 verläuft und den Rücklauf bildet, ist im gezeigten Ausführungsbeispiel ebenfalls innerhalb des Ofens 14 angeordnet. Er kann jedoch auch, wie in der Ausführungsform nach Figur 2 gezeigt ist, außerhalb des Ofens 14 angeordnet sein.

Zum Betrieb der Reckanlage 10 wird die zu reckende Materialbahn 50, beispielsweise eine Kunststofffolie, in der Einlaufzone 18 der Reckanlage 10 in Abzugsrichtung R zugeführt. Hierzu wird die Materialbahn 50 mittels ihrer in Abzugsrichtung R verlaufenden Kanten an beiden Antriebssystemen 16 befestigt.

Genauer gesagt werden die Ränder der Materialbahn 50 durch eine entsprechende Kluppeneinheiten 100 geklemmt und somit durch die Bewegung der Kluppeneinheiten 100 entlang der Führungsschienen 40, 42 der Antriebssysteme 16 bewegt.

In der Einlaufzone 18 hat die Materialbahn 50 eine Breite E (Eingangsbreite) senkrecht zur Abzugsrichtung R, die in etwa dem ersten Abstand zwischen den Antriebssystemen 16 entspricht.

Die Materialbahn 50 wird dann durch die erste Zone 22 geführt und dort erwärmt. In der anschließenden zweiten Zone 24, also der Reckzone, wird die Materialbahn 50 gereckt, da sich der Abstand der Antriebssysteme 16 kontinuierlich vergrößert. Zum Ende der zweiten Zone 24 weist die Materialbahn 12 eine zweite Breite A (Ausgangsbreite) auf.

Nach erfolgter Reckung durchläuft die Materialbahn 50 nun die dritte Zone 26, bei der eine Relaxierung der Materialbahn 50 erfolgen kann, bevor die Materialbahn 50 in der Auslaufzone 20 von den Kluppeneinheiten 100 gelöst wird und sie die Reckanlage 10 mit der Breite A verlässt.

Beispielsweise ist die Reckanlage 10 eine Folien-Breit- bzw. QuerReckanlage, die kurz als TDO (TDO = transverse direction orienter) bezeichnet wird. Denkbar ist auch, dass die Reckanlage 10 eine Simultanreckanlage ist, in der die Materialbahn 50 in der zweiten Zone 24, also der Reckzone, nicht nur in Richtung quer zur Abzugsrichtung R sondern auch in der Abzugsrichtung R gereckt werden kann.

Während der Verarbeitung der Materialbahn 50 wirken vor allem in der zweiten Zone 24, also der Reckzone, auf die Kluppeneinheiten 28 große Zugkräfte in eine Zugrichtung. Die Zugrichtung hat eine überwiegende Komponente in eine Primärrichtung P der Kluppeneinheiten 100 und eine kleinere Komponente quer zur Primärrichtung P.

Weiterhin kann die Reckanlage 10 zumindest eine magnetische Öffnereinrichtung 30 umfassen, welche die Kluppeneinheiten 100 nach dem Durchlaufen der Reckzone bzw. der Relaxierungszone berührungslos (magnetisch) öffnet. Weiterhin kann die Reckanlage zumindest eine magnetische Schließeinrichtung 31 umfassen, welche die Kluppeneinheiten 100 berührungslos schließt, um die Materialbahn 50 zu greifen.

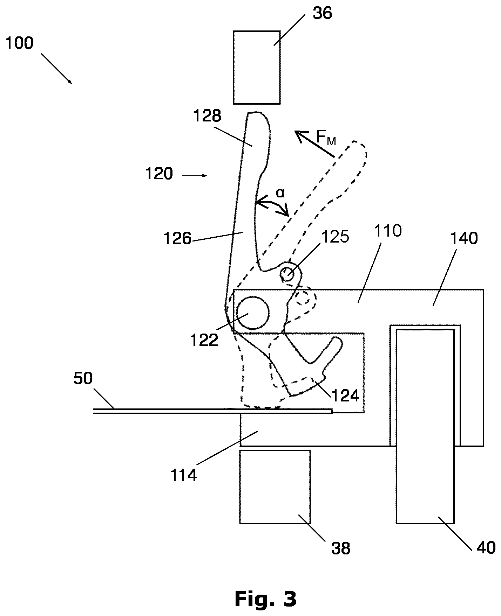

Figur 3 zeigt eine schematische Darstellung einer erfindungsgemäßen Kluppeneinheit 100.

Die Kluppeneinheit 100 umfasst einen Grundkörper 110 und eine Messerklappe 120. Die Messerklappe 120 ist am Grundkörper 110 um eine Drehachse 122 verschwenkbar gelagert (Winkel $\alpha$), um von einer Greifstellung (gestrichelte Darstellung) in eine Offenstellung (durchgehende Linie) verschwenkt zu werden.

Weiterhin umfasst die Kluppeneinheit 100 ein Führungselement 140, welches dazu dient, die Kluppeneinheit auf einer Führungsschiene 40 zu führen.

Am Grundkörper 110 ist überdies eine Greifbacke 114 angeordnet (oder integral mit dem Grundkörper ausgeführt), welche mit einer komplementären Greifbacke 124, die Teil der Messerklappe 120 ist, zusammenzuwirken. In der Greifstellung ist eine Materialbahn 50 zwischen den Greifbacken 114, 124 geklemmt.

Weiterhin umfasst die Messerklappe 120 einen Halsabschnitt 126 und einen Kopfabschnitt 128. Der Halsabschnitt 126 erstreckt sich von der Drehachse 122 bis zum Kopfabschnitt 128.

Um die Messerklappe zu öffnen bzw. zu schließen können magnetische Öffner- bzw. Schließeinrichtungen 30, 31 eingesetzt werden, welche zumindest einen Magnet 36 umfassen. Je nach Anordnung des Magneten 36 wirkt auf die Messerklappe 120, insbesondere deren Kopfabschnitt 128, eine Magnetkraft $F_M$, die die Messerklappe in die Greifstellung (wie in Fig. 3) oder in die geöffnete Stellung drängt.

Um zu verhindern, dass der Magnet 36 die Kluppeneinheit 100 von der Führungsschiene 40 anhebt, kann ein Gegenhaltemagnet 38 angeordnet sein, welcher die Kluppeneinheit 100 auf die Führungsschiene 40 zieht.

Weiterhin kann an der Messerklappe ein Anschlagpunkt 125 angeordnet sein (beispielsweise in Form eine Öse). Der Anschlagpunkt 125 dient der Befestigung eines Vorspannelements (nicht gezeigt). Das Vorspannelement, insbesondere eine Druckfeder, kann so zwischen dem Anschlagpunkt 125 und dem Grundkörper 110 angeordnet sein, um die Messerklappe 120 in der Greifstellung vorzuspannen.

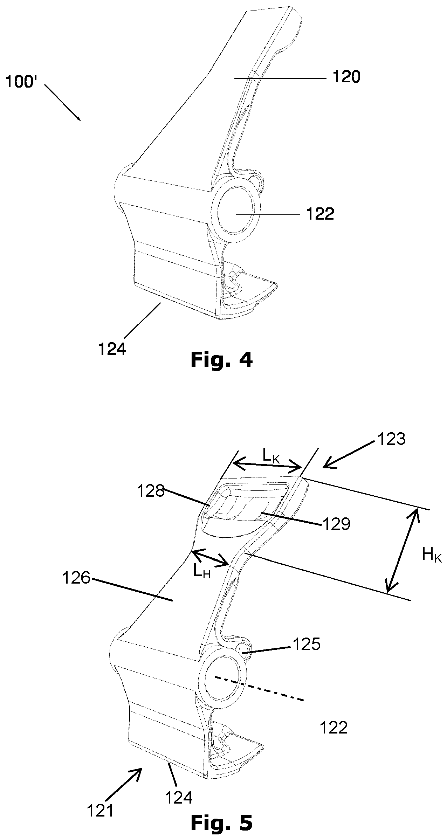

In Figur 4 ist eine schematische Darstellung einer Messerklappe nach dem Stand der Technik gezeigt. Diese bekannte Messerklappe 120 kann ebenfalls um eine Drehachse 122 gelagert werden, um von einer geöffneten Stellung in eine Greifstellung verschwenkt zu werden. Hier ist jedoch kein erfindungsgemäßer Hals- und Kopfabschnitt vorgesehen, sodass diese Art der Messerklappe insbesondere bei hohen Geschwindigkeiten mittels magnetischer Öffnereinrichtung nicht zuverlässig geöffnet und entsprechend auch nicht zuverlässig geschlossen werden kann.

In Figur 5 ist eine Messerklappe 120 einer erfindungsgemäßen Kluppeneinheit 100 dargestellt. Diese Messerklappe 120 umfasst einen Halsabschnitt 126, der sich von der Drehachse 122 zum Kopfabschnitt 128 erstreckt. An einem ersten Ende 121 weist die Messerklappe eine komplementäre Greifbacke 124 auf. An dem gegenüberliegenden zweiten Ende 123 ist der Kopfabschnitt 128 angeordnet.

Der Kopfabschnitt 128 weist eine obere Länge $L_K$ auf (gemessen in einer Bewegungsrichtung R der Kluppeneinheit 100), welche zumindest 50% länger ist, als eine minimale Länge $L_H$ des Halsabschnitts 126. Die gezeigte Messerklappe verjüngt sich also im Halsschnitt, bevor sie sich im Kopfabschnitt wieder verbreitert.

Im hier gezeigten Beispiel ist die obere Länge $L_K$ des Kopfabschnitts 128 im Bereich von 20 mm bis 60 mm, insbesondere im Bereich von 35 mm bis 55 mm, und insbesondere im Bereich von 45 mm bis 50 mm.

Weiterhin kann der Kopfabschnitt eine Höhe $H_K$ aufweisen, gemessen in der Haupterstreckungsrichtung des Halsabschnitts, die im Bereich von 10 mm bis 30 mm, oder im Bereich von 15 mm bis 25 mm, oder im Bereich von 17 mm bis 21 mm liegt.

Diese Geometrie führt zu einer deutlichen Steigerung der Magnetkraft $F_M$, sodass höhere Anlagengeschwindigkeiten bei gleichbleibend hoher Zuverlässigkeit beim Öffnen/Schließen möglich sind.

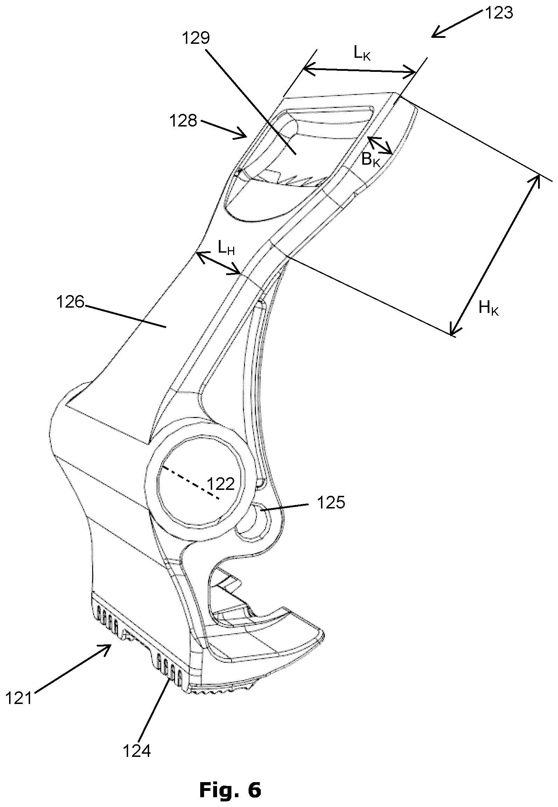

Optional weist der Kopfabschnitt 128 einen Rücksprung 129 oder einen Durchbruch auf. Dieser ist im Detail mit Bezug auf Fig. 6 beschrieben.

Wie in Figur 5 gezeigt ist, kann der Anschlagpunkt 125 in einem Bereich zwischen der Drehachse 122 und dem Kopfabschnitt 128 liegen. Es ist jedoch auch möglich, den Anschlagpunkt 125 wie in Figur 6 gezeigt ist, zwischen der komplementären Greifbacke 124 und der Drehachse 122 anzuordnen.

Figur 6 zeigt eine weitere Messerklappe 120 einer erfindungsgemäßen Kluppeneinheit 100. Gleiche Elemente sind hier mit den gleichen Bezugszeichen gekennzeichnet, sodass auf eine wiederholende Beschreibung verzichtet wird.

In der in Figur 6 gezeigten Messerklappe 120 weist der Kopfabschnitt 128 eine größere Breite $B_K$ auf, als der Halsabschnitt 126. Die Breite $B_K$ des Kopfabschnitts 128 ist optional im Bereich von 2 mm bis 6 mm, oder im Bereich von 3 mm bis 5.5 mm, oder im Bereich von 4 mm bis 5 mm.

Auch hier ist in den Kopfabschnitte 128 ein Rücksprung 129 eingebracht. Der Rücksprung 129 weist eine Tiefe auf, die zumindest 30 %, oder zumindest 50%, oder zumindest 70% der Breite $B_K$ des Kopfabschnitts 128 beträgt.

Weiterhin weist der Rücksprung 129 eine obere Kante auf, die im Wesentlichen parallel zu einer oberen Kante des Kopfabschnitts 128 verläuft. Das obere Ende des Kopfabschnitts ist somit verdickt ausgebildet. Ebenso können seitlich des Rücksprungs verdickte Bereiche ausgebildet sein.

Der Abstand zwischen der oberen Kante des Rücksprungs 129 und der oberen Kante des Kopfabschnitts 128 liegt beispielsweise in einem Bereich von 2 mm bis 6 mm, oder in einem Bereich von 2.5 mm bis 5 mm, oder in einem Bereich von 3 mm bis 4 mm. Die seitlichen verdickten Bereiche können eine Längsausdehnung (in Bewegungsrichtung R) aufweisen, welche in einem Bereich von 2 mm bis 6 mm, oder in einem Bereich von 2.5 mm bis 5 mm, oder in einem Bereich von 3 mm bis 4 mm liegt.

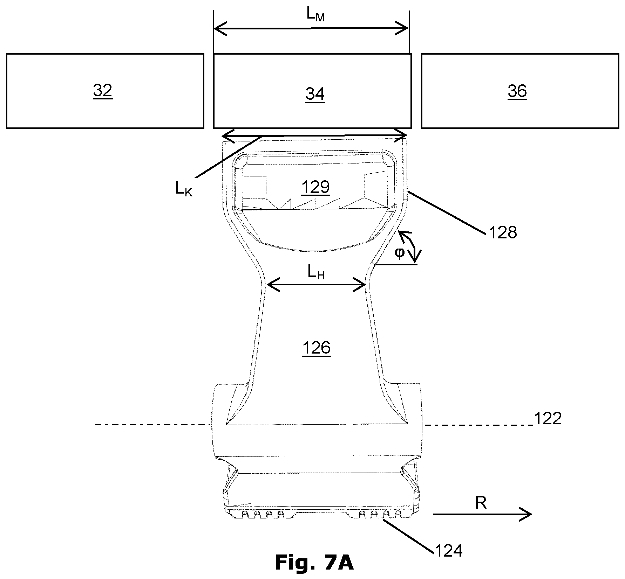

Figur 7A zeigt die Messerklappe 120 aus Fig. 5, welche an einer Öffnereinrichtung bzw. deren Magneten 32, 34, 36 in Bewegungsrichtung R vorbeigeführt wird. Hierbei wirkt eine Magnetkraft $F_M$ auf den Kopfabschnitt 128 der Messerklappe 120.

Zudem ist hier der Flügelwinkel φ eingezeichnet, also der Winkel, der von einer Seitenkante des Kopfabschnitts mit einer Linie eingeschlossen ist, die parallel zur Drehachse 122 ist. Beispielsweise liegt der Flügelwinkel φ in einem Bereich von 0° bis 80°, oder in einem Bereich von 30° bis 75°, oder in einem Bereich von 45° bis 65°.

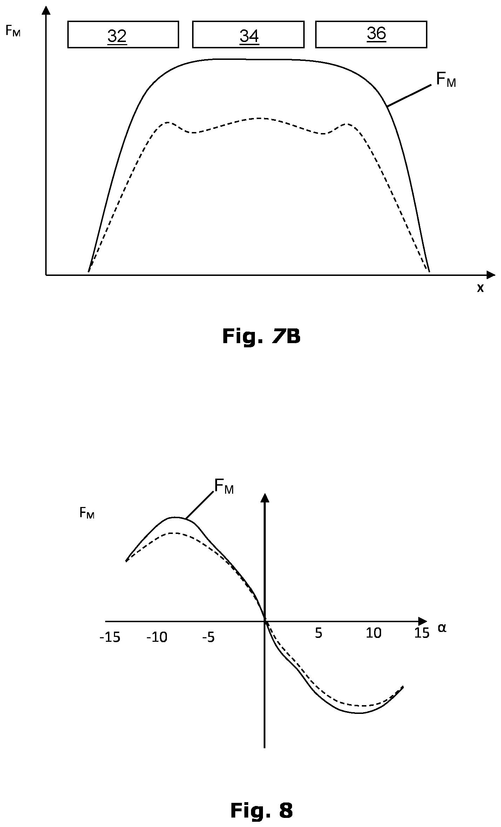

Der in Fig. 7B dargestellte Graph zeigt, wie sich die Magnetkraft $F_M$ im Vergleich zu der in Fig. 4 dargestellten Messerklappe des Stands der Technik verändert hat. Die durchgehende Linie zeigt die Magnetkraft $F_M$, die auf eine erfindungsgemäße Messerklappe wirkt. Die gestrichelte Linie zeigt die Magnetkraft $F_M$, die auf eine gewöhnliche Messerklappe des Stands der Technik wirkt.

Zum einen konnte die Magnetkraft um 25-35% gesteigert werden. Zudem zeigt sich, dass der Verlauf der Magnetkraft in der Längsausdehnung x, d.h. in der Bewegungsrichtung R, ein gleichmäßiges Plateau - ohne lokale Peaks - ausbildet. Beide Effekte führen zu einem zuverlässigeren Öffnen/Schließen der erfindungsgemäßen Messerklappe.

In Figur 8 ist ein weiterer Graph gezeigt, der den Verlauf der Magnetkraft FM in Anhängigkeit der Winkelstellung α zeigt. Die durchgehende Linie zeigt die Magnetkraft $F_M$, die auf eine erfindungsgemäße Messerklappe wirkt. Die gestrichelte Linie zeigt die Magnetkraft $F_M$, die auf eine gewöhnliche Messerklappe des Stands der Technik wirkt. Auch hier zeigt sich, dass insbesondere auf die verschwenkte Messerklappe (Auslenkung 10°) eine deutlich stärkere Magnetkraft wirkt.

Die erfindungsgemäßen Kluppeneinheiten bzw. Reckanlage können somit mit hohen Geschwindigkeiten betrieben werden und stellen zugleich eine hohe Zuverlässigkeit beim berührungslosen Öffnen/Schließen der Kluppeneinheiten bereit.

**Bezugszeichenliste**

| | |
|---|---|
| 10 | Reckanlage |
| 14 | Ofen |
| 16 | Antriebssystem |
| 18 | Einlaufzone |
| 20 | Auslaufzone |
| 22 | Zone (Vorheizzone) |
| 24 | Zone (Reckzone) |
| 26 | Zone (Wärmebehandlungszone) |
| 30 | Öffnereinrichtung |
| 31 | Schließeinrichtung |
| 32 | Magnet |
| 34 | Magnet |
| 36 | Magnet |
| 38 | Gegenhaltemagnet |
| 40 | Führungsschiene |
| 42 | Führungsschiene |
| 50 | Materialbahn |
| 100 | Kluppeneinheit |
| 110 | Grundkörper |
| 114 | Greifbacke |
| 120 | Messerklappe |
| 121 | erstes Ende |
| 122 | Drehachse |
| 124 | komplementäre Greifbacke |
| 125 | Anschlagpunkt |
| 126 | Halsabschnitt |
| 128 | Kopfabschnitt |
| 129 | Rücksprung |
| 140 | Führungselement |
| R | Bewegungsrichtung der Materialbahn |
| P | Querkraft |
| A | Ausgangsbreite |
| E | Eingangsbreite |
| S | Symmetrieebene |
| $L_K$ | Länge Kopfabschnitt |
| $L_H$ | Länge Halsabschnitt |
| $L_M$ | Länge Magnet |
| $B_K$ | Breite Kopfabschnitt |
| $H_K$ | Höhe Kopfabschnitt |
| $F_M$ | Magnetkraft (in Breitenrichtung) |

**Patentansprüche**

1. Eine Kluppeneinheit (100) für eine Reckanlage (10), insbesondere für eine Querreckanlage oder eine Simultanreckanlage, wobei

die Kluppeneinheit (100) dazu eingerichtet ist auf einer Führungsschiene (40) geführt zu werden, und wobei
die Kluppeneinheit (100) einen Grundkörper (110), eine Greifbacke (114) und zumindest eine Messerklappe (120) umfasst, wobei
die Messerklappe (120) um eine Drehachse (122) verschwenkbar am Grundkörper (110) angeordnet ist, um von einer Greifstellung in eine Offenstellung verschwenkt zu werden, wobei
die Messerklappe (120) an einem ersten Ende (121) eine komplementäre Greifbacke (124) aufweist, die in der Greifstellung mit der Greifbacke (114) zusammenwirkt, um eine Materialbahn (50) zu greifen, und wobei
die Messerklappe (120) einen Halsabschnitt (126) und einen Kopfabschnitt (128) aufweist, wobei

sich der Halsabschnitt (126) von der Drehachse (122) bis zum Kopfabschnitt (128) erstreckt, welcher Kopfabschnitt (128) ein zweites Ende (123) der Messerklappe (120) bildet, und wobei der Kopfabschnitt (128) eine obere Länge ($L_K$), gemessen in einer Bewegungsrichtung (R) der Kluppeneinheit (100), aufweist, welche obere Länge ($L_K$) zumindest 50% länger ist, als eine minimale Länge ($L_H$) des Halsabschnitts (126), gemessen in einer Bewegungsrichtung (R) der Kluppeneinheit (100).

2.  Die Kluppeneinheit (100) nach Anspruch 1, wobei die Kluppeneinheit (100) mehrere Messerklappen (120) umfasst, wobei
die Messerklappen in der Bewegungsrichtung (R) der Kluppeneinheit (100) nebeneinander angeordnet sind.

3.  Die Kluppeneinheit (100) nach Anspruch 1 oder 2, wobei sich die Länge des Halsabschnitts (126) in Richtung des Kopfabschnitts (128) zumindest bereichsweise verjüngt.

4.  Die Kluppeneinheit (100) nach einem der vorstehenden Ansprüche, wobei der Kopfabschnitt (128) einen Rücksprung (129) oder einen Durchbruch aufweist, wobei

der Rücksprung (129) optional eine Tiefe aufweist, die zumindest 30 %, oder zumindest 50%, oder zumindest 70% der Breite ($B_K$) des Kopfabschnitts (128) beträgt, wobei der Rücksprung (129) oder der Durchbruch optional eine obere Kante aufweist, die im Wesentlichen parallel zu einer oberen Kante des Kopfabschnitts (128) verläuft, wobei
der Abstand zwischen der oberen Kante des Rücksprungs (129) oder des Durchbruchs und der oberen Kante des Kopfabschnitts (128) optional im Bereich von 2 mm bis 6 mm, oder im Bereich von 2.5 mm bis 5 mm, oder im Bereich von 3 mm bis 4 mm liegt.

5.  Die Kluppeneinheit (100) nach einem der vorstehenden Ansprüche, wobei

die obere Länge ($L_K$) des Kopfabschnitts (128) im Bereich von 20 mm bis 60 mm, oder im Bereich von 35 mm bis 55 mm, oder im Bereich von 45 mm bis 50 mm liegt, und/oder wobei der Flügelwinkel ($\varphi$) des Kopfabschnitts (128) in einem Bereich von 0° bis 80°, oder in einem Bereich von 30° bis 75°, oder in einem Bereich von 45° bis 65° liegt, und/oder wobei der Kopfabschnitt (128) eine größere Breite ($B_K$) aufweist als der Halsabschnitt (126), und wobei die Breite ($B_K$) des Kopfabschnitts (128) optional im Bereich von 2 mm bis 6 mm, oder im Bereich von 3 mm bis 5.5 mm, oder im Bereich von 4 mm bis 5 mm liegt, und/oder wobei der Kopfabschnitt eine Höhe ($H_K$), gemessen in der Haupterstreckungsrichtung des Halsabschnitts, im Bereich von 10 mm bis 30 mm, oder im Bereich von 15 mm bis 25 mm, oder im Bereich von 17 mm bis 21 mm aufweist.

6.  Die Kluppeneinheit (100) nach einem der vorstehenden Ansprüche, wobei die Kluppeneinheit (100) weiterhin zumindest ein Führungselement (140) umfasst, wobei

das zumindest ein Führungselement (140) am Grundkörper angeordnet ist und dazu eingerichtet ist die Kluppeneinheit (100) auf der Führungsschiene (40) zu führen, und wobei das zumindest eine Führungselement ein Gleitelement oder eine Führungsrollen umfasst.

7.  Die Kluppeneinheit (100) nach einem der vorstehenden Ansprüche, wobei

der Grundkörper (110) weiterhin dazu eingerichtet ist mit einem Kettenglied verbunden zu werden und/oder wobei die Kluppeneinheit (100) zumindest ein Kettenglied umfasst, wobei der Grundkörper (110) mit zumindest einem Kettenglied fest verbunden ist.

8.  Die Kluppeneinheit (100) nach einem der vorstehenden Ansprüche, wobei die Messerklappe (120) einen Anschlagpunkt (125) für ein Vorspannelement aufweist, und wobei ein Vorspannelement, insbesondere eine Druckfeder, zwischen dem Anschlagpunkt (125) und dem Grundkörper (110) angeordnet ist, um die Messerklappe (120) in der Greifstellung vorzuspannen, wobei
der Anschlagpunkt (125) optional in einem Bereich zwischen der komplementären Greifbacke (124) und der Drehachse (122) angeordnet ist, oder wobei die Drehachse (122) optional in einem Bereich zwischen der komplementären Greifbacke (124) und dem Anschlagpunkt (125) angeordnet ist.

9.  Die Kluppeneinheit (100) nach einem der vorstehenden Ansprüche, wobei der Kopfabschnitt (128) höher magnetisiert ist als der Halsabschnitt (126) und/oder wobei der Kopfabschnitt (128) zumindest einen Magneten umfasst.

10. Die Kluppeneinheit (100) nach einem der vorstehenden Ansprüche, wobei die Messerklappe (120) aus Stahl gefertigt ist, und wobei der Kopfabschnitt (128) einen geringeren Kohlenstoffgehalt aufweist als der Halsabschnitt (126).

**11.** Die Kluppeneinheit (100) nach einem der vorstehenden Ansprüche, wobei der Kopfabschnitt (128) wärmebehandelt, insbesondere gehärtet ist.

**12.** Eine Reckanlage (10), insbesondere eine Querreckanlage oder eine Simultanreckanlage, wobei die Reckanlage (10) zumindest eine Führungsschiene (40, 42) und zumindest eine Kluppeneinheit (100) gemäß einem der Ansprüche 1 bis 15 umfasst, wobei die Kluppeneinheit (100) auf der Führungsschiene (40, 42) geführt ist.

**13.** Reckanlage (10) nach Anspruch 12, wobei

die Reckanlage (10) zumindest eine magnetische Öffnereinrichtung (30) und/oder zumindest eine magnetische Schließeinrichtung (31) umfasst,
welche magnetische Öffnereinrichtung (30) zumindest einen Magnet (32, 34, 36) umfasst, welcher Magnet (32, 34, 36) so im Bereich der zumindest einen Führungsschiene (40, 42) angeordnet ist, dass die Messerklappe (120) einer Kluppeneinheit (100) in die Offenstellung verschwenkt wird, wenn die Kluppeneinheit (100) an der magnetischen Öffnereinrichtung (30) vorbei geführt wird, und
welche magnetische Schließeinrichtung (31) zumindest einen Magnet umfasst, welcher Magnet so im Bereich der zumindest einen Führungsschiene (40, 42) angeordnet ist, dass die Messerklappe (120) einer Kluppeneinheit (100) in die Greifstellung verschwenkt wird, wenn die Kluppeneinheit (100) an der magnetischen Schließeinrichtung (31) vorbei geführt wird, wobei
der zumindest eine Magnet optional eine Länge ($L_M$) aufweist, gemessen in einer Bewegungsrichtung (R) der Kluppeneinheit (100), die die folgende Bedingung erfüllt:

$$0.8 \ L_K \le L_M \le 1.2 \ L_K.$$

**14.** Reckanlage (10) nach Anspruch 13, wobei der Abstand zwischen zwei benachbarten Magneten (32, 34, 36) kleiner oder gleich ($L_M$-$L_K$)/2 ist.

**15.** Reckanlage (10) nach einem der Ansprüche 12 bis 14, wobei ein Luftspalt (s) zwischen dem zumindest einen Magnet und dem Kopfabschnitt (128) einer Messerklappe (120) im Bereich von 1.5 mm bis 5 mm, oder im Bereich von 2 mm bis 4 mm oder im Bereich von 2.5 mm bis 3.5 mm liegt.

**Fig. 1**

**Fig. 2**

**Fig. 3**

100'

120

122

124

**Fig. 4**

123

$L_K$

128

129

$H_K$

126

$L_H$

125

122

121

124

**Fig. 5**

**Fig. 6**

**Fig. 7A**

$F_M$

| 32 | 34 | 36 |
|---|---|---|

$F_M$

x

**Fig. 7B**

$F_M$

$F_M$

-15    -10    -5        5    10    15   α

**Fig. 8**